# EUROPÄISCHE PATENTSCHRIFT

(11) **EP 0 822 379 B1**
(45) Veröffentlichungstag und Bekanntmachung des Hinweises auf die Patenterteilung: **03.07.2002**
(21) Anmeldenummer: 97112111.6
(22) Anmeldetag: 16.07.1997
(51) Int. Cl.: F25D 23/06, F16L 59/06

(54) **Fixiertes Vakuumisolierpaneel sowie ein dieses fixierte Vakuumisolierpaneel enthaltende Kühlmöbelelement**
Mounted vacuum insulation panel and refrigerator element comprising such a mounted vacuum insulation panel
Panneau fixé isolant sous vide et élément d'armoire frigorifique comportant un tel panneau fixé isolant sous vide

(30) Priorität: 29.07.1996 DE 29613093 U
(43) Veröffentlichungstag der Anmeldung: 04.02.1998
(73) Patentinhaber: BAYER AG, 51368 Leverkusen (DE)
(72) Erfinder: Dietrich, Karl Werner, Dr., 51519 Odenthal (DE)

(56) Entgegenhaltungen:
- EP-A- 0 434 225
- EP-A- 0 437 930
- EP-A- 0 715 138
- WO-A-96/39894
- PATENT ABSTRACTS OF JAPAN vol. 018, no. 550 (M-1690), 20.Oktober 1994 & JP 06 194030 A (MATSUSHITA REFRIG CO LTD), 15.Juli 1994,

## Beschreibung

Vakuumisolierpaneele werden üblicherweise zur thermischen Isolierung eingesetzt. Bekannte Vakuumisolierpaneele bestehen aus einer vorkomprimierten porösen Schüttung, einer porösen Preßplatte oder einem offenzelligen harten Schaumstoff als Substrat, das von einer gasdichten Folie umhüllt wird, wobei die Folie nach dem Evakuieren verschweißt oder verklebt wird.

Als Füllmaterial von Vakuumisolierpaneelen dienen beispielsweise gefällte und getrocknete Kieselsäuren, Silicagele, Flugasche, offenzellige Schäume auf organischer Basis wie offenzellige Polyurethan-Hartschäume oder gebundenes Polyurethan-Hartschaummehl, wie sie z.B. in der DE 4 439 331 und DE 4 439 328 beschrieben werden.

Solche Vakuumisolierpaneele werden auch bereits bei der Herstellung von Kühlräumen, z.B. Kühlschränken oder Kühlcontainern eingesetzt, indem diese zwischen Außen- und Innengehäuse eingelegt werden und der verbleibende Zwischenraum zwischen Außen- und Innengehäuse ausgeschäumt wird.

Aus der EP 0 437 930 A1 ist eine Anordnung bekannt, wo Polyurethan-Schaum für eine zusätzliche Fixierung benutzt wird.

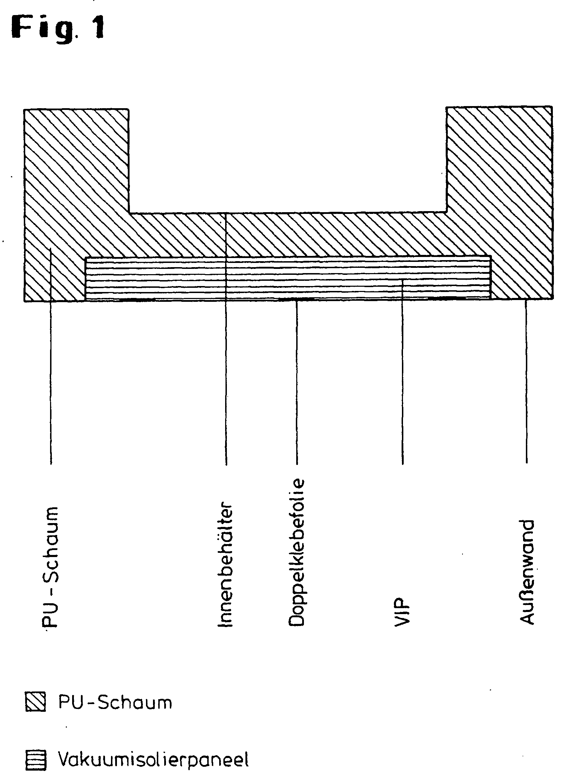

Probleme bereitet jedoch der Einbau der Vakuumisolierpaneelen in Kühlschrankgehäusen. Nach dem heutigen Stand der Technik werden sie mittels Doppelklebefolie auf einer Platte - zum Beispiel einer Metallkasette - aufgeklebt. Anschließend kann diese Kombinationsplatte zu einer Sandwichplatte, beispielsweise einer Kühlschranktür, weiterverarbeitet werden, wobei der verbliebene Hohlraum konventionell ausgeschäumt wird (Figur 1).

Hierdurch wird einerseits ein komplizierter, mehrstufiger Prozeß notwendig, andererseits wird Dämmvolumen von dem - im Vergleich zum Vakuumisolierpaneel - dämmtechnisch weniger effizienten Schaumstoff beansprucht. Auch sind derartige Anordnungen nur bedingt wärmebrückenfrei.

Diese Nachteile können vermieden werden, wenn man das Vakuumisolierpaneel mit einem Polyurethan-Schaumstoffstreifen fixiert, welcher als flüssiges Reaktionsgemisch - vorzugsweise umlaufend - am Rand des Vakuumisolierpaneeles auf der starren Deckschicht oder zwischen zwei starren Deckschichten aufgebracht wird.

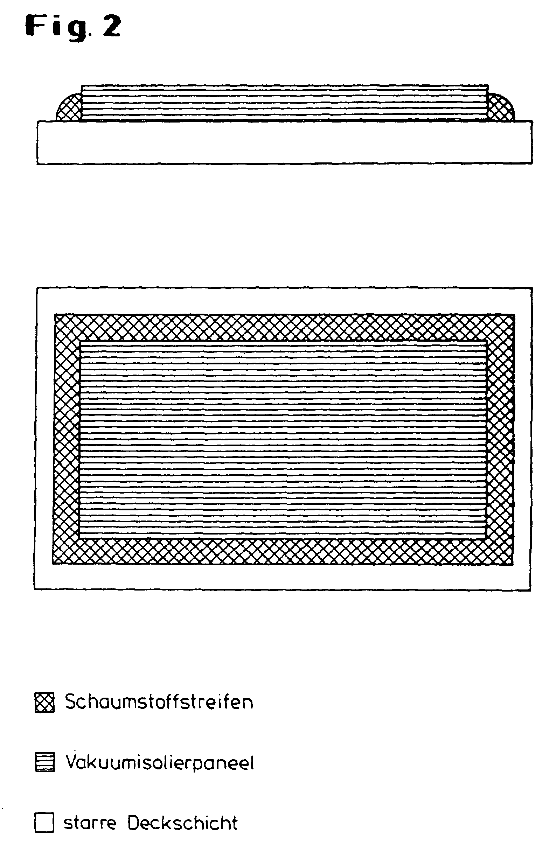

Gegenstand der vorliegenden Erfindung ist daher ein auf einer starren Platte befestigtes Vakuumisolierpaneel, welches durch einen als flüssiges Reaktionsgemisch aufgebrachten Polyurethan-Schaum auf der starren Platte fixiert ist (Figur 2).

Das Vakuumisolierpaneel wird auf der starren Platte, z.B. einer Metallplatte oder Kunststoffplatte aus ABS oder Polysyrol, fixiert, indem man das Vakuumisolierpaneel auf die starre Platte legt und rund um das Vakuumisolierpaneel ein flüssiges Polyurethanschaum-Reaktionsgemisch gibt, wobei der Schaumstoff beim Aufschäumen und Aushärten sowohl an der Platte als auch am Vakuumisolierpaneel haftet und so das Vakuumisolierpaneel mit der Platte verbindet. Vorteilhaft wird hierbei auf sehr einfache Weise das Vakuumisolierpaneel fest und wärmebrückenfrei auf der Platte verankert.

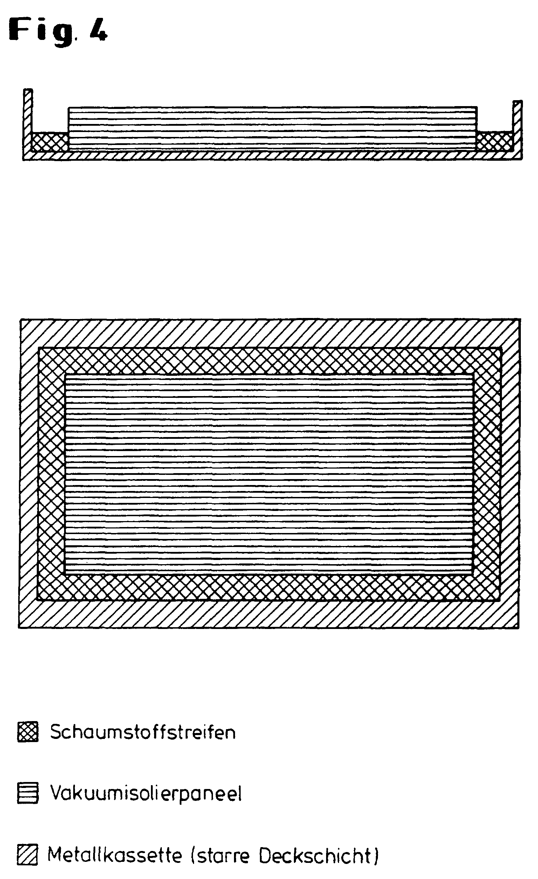

Als starre Platte wird bevorzugt eine Metallkassette eingesetzt (Figur 4).

Gegebenenfalls kann auch das Schaumstoff-Reaktionsgemisch zunächst aufgebracht und das Vakuumisolierpaneel dann in das noch flüssige Reaktionsgemisch eingelegt werden. Nach der beanspruchten Anordnung wird auch eine Platte mit unregelmäßiger Oberfläche, z.B. eine Verdampferplatte eines Kältegerätes oder ein profiliertes Blech, einfach und wirtschaftlich mit einem Vakuumisolierpaneel kombiniert.

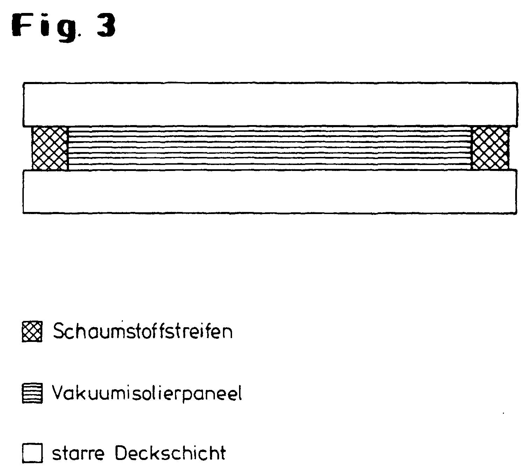

Erfindungsgemäß kann das Vakuumisolierpanell auch zwischen starren Platten in Sandwichbauweise fixiert sein (Figur 3). Vorteilhafterweise werden für das Vakuumisolierpaneel starre Platten aus offenporigem Recyclat verwendet. Hierdurch wird Paßgenauigkeit, Maßhaltigkeit und Ebenheit des Vakuumisolierpaneels sichergestellt.

Als Polyurethanschaum-Reaktionsgemische zur Fixierung des Vakuumisolierpaneels auf der starren Platte können alle an sich gebräuchlichen Polyurethanschaum-Reaktionsgemische, wie sie im Kühlmöbelbau üblich sind, eingesetzt werden. Vorzugsweise setzt man Polyurethan-Einkomponentenschäume, z.B. Assil® (Fa. Henkel) ein.

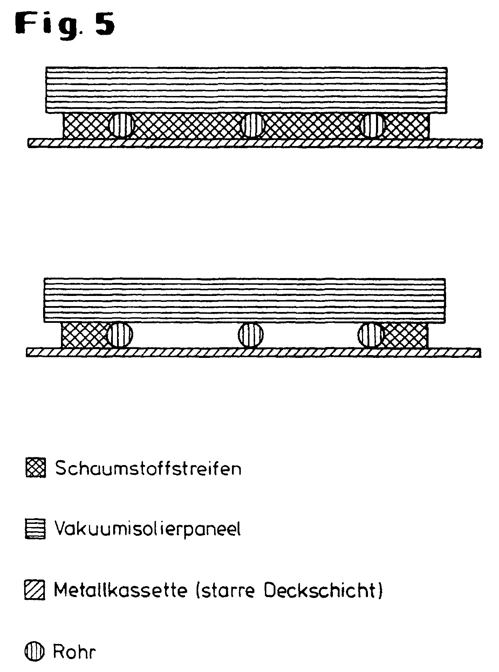

Eine Anwendung der Erfindung ist ein Kühlmöbelelement, welches ein mit einem flüssigen Polyurethanschaum-Reaktionsgemisch auf einer starren Platte fixiertes Vakuumisolierpaneel enthält. Derartige erfindungsgemäße Kühlmöbelelemente können als Kühlmöbel-Seiten, -Rück- oder -Oberteile verwendet werden. Darüber hinaus kann ein Vakuumisolierpaneel auch auf einem Verdampfer fixiert werden (Figur 5).

Die folgenden Beispiele sollen die Erfindung näher erläutern, ohne sie jedoch in ihrem Umfang zu begrenzen.

### Figuren

- Figur 1:: Anordnung nach dem Stand der Technik (VIP: Vakuumisolierpaneel)
- Figur 2:: Erfindungsgemäße Anordnung, bei der das Vakuumisoleirpaneel mittels umlaufender Polyurethan-Schaumstreifen auf einer starren Deckschicht fixiert (Seitenansicht u. Aufsicht)
- Figur 3:: Erfindungsgemäße Anordnung mit einer Metallkassette als starre Deckschicht (Seitenansicht u. Aufsicht)
- Figur 4:: Erfindungsgemäße Anordnung, bei der das Vakuumisolierpaneel zwischen 2 starren Deckschichten fixiert ist (Seitenansicht)
- Figur 5:: Erfindungsgemäße Anordnung mit Kältemittel-Verdampfereinheit (Seitenansicht)

### Beispiele

### Beispiel 1

### Herstellung eines Vakuumisolierpaneels:

Eine Platte der Maße 800 x 500 x 25 mm aus offenporigem PU-Hartschaum der Rohdichte 60 kg/m³ wird unter Vakuum (0,5 mbar) in einen Folienbeutel, bestehend aus einem 3-Lagen-Komplex (Polyesteer, Aluminium, Polyethylen) eingeschweißt. Das hergesstellte Vakuumisolierpaneel hat eine Wärmeleitfähigkeit λ von 10 mW.

### Beispiel 2

### In einer Metallkassette fixiertes Vakuumisolierpaneel:

In einer Stahlkassette der Maße 600 x 800 mm mit einem um 30 mm umgefalzten Rand (vgl. Zeichnung 3) wird mittig zentriert ein Vakuumisolierpaneel der Maße 540 x 740 x 20 mm eingelegt. Der umlaufende, 30 mm breite Spalt wird mit Polyurethan-Einkomponentenschaum ausgefüllt. Das Vakuumisolierpaneel wird hierdurch wärmebrückenfrei und fest verankert.

### Beispiel 3

### Auf einer Aluminiumplatte fixiertes Vakuumisolierpaneel:

Auf einer Aluminiumplatte der Maße 400 x 500 x 0,5 mm sind 5 mm starke Aluminiumrohre schlangenförmig aufgeschweißt. Auf die Blechseite, auf der die Rohre aufgeschweißt sind, wird ein Polyurethan-Reaktionsgemisch, besstehend aus 100 Gewichtsteilen (GT) eines Glycerin-Sucrose cogestarteeten Polyethers der OH-Zahl 400, 2 GT Wasser, 10 GT Cyclopentan, 2 GT Dimethylcyclohexylamin, 100 GT Polymer MD, aufgelegt. Während des Aufschäumvorganges wird ein Vakuumisolierpaneel der gleichen Maße wie die Aluminiumplatte auf das aufsteigende Reaktionsgemisch aufgelegt. Nach dem Aushärten des Schaumes hat dieser die mit den Aluminiumrohren belegte Platte fest mit dem Vakuumisolierpaneel verbunden.

## Patentansprüche

1. Anordnung bestehend aus einer starren Platte, auf der Rohre befestigt sind, und einem Vakuumisolierpaneel, **dadurch gekennzeichnet, dass** die starre Platte und das Vakuumisolierpaneel so angeordnet sind, dass die Rohre, die auf der starren Platte befestigt sind, und das Vakuumisolierpanel an der von der starren Platte abgewandten Seite der Rohre in direktem Kontakt zueinander sind, und das Vakuumisolierpaneel mit der Platte, auf der die Rohre befestigt sind, durch Polyurethan-Schaum, der sich in den Hohlräumen zwischen den Rohren und zwischen dem Vakuumisolierpaneel und der Platte befindet, durch Klebewirkung verbunden ist.

2. Anordnung bestehend aus einer starren, profilierten Platte und einem Vakuumisolierpaneel, **dadurch gekennzeichnet, dass** die starre, profilierte Platte und das Vakuumisolierpaneel so angeordnet sind, dass die starre, profilierte Platte und das Vakuumisolierpanel an den durch das Profil erzeugten, erhöhten Stellen der starren, profilierten Platte in direktem Kontakt zueinander sind, und das Vakuumisolierpaneel mit der Platte durch Polyurethan-Schaum, der sich in den Hohlräumen zwischen der starren, profilierten Platte und dem Vakuumisolierpaneel befindet, durch Klebewirkung verbunden ist.

3. Anordnung bestehend aus einer starren Platte und einem Vakuumisolierpaneel, **dadurch gekennzeichnet, dass** die starre Platte und das Vakuumisolierpaneel so angeordnet sind, dass sie in direktem Kontakt zueinander sind, die Platte das Vakuumisolierpaneel seitlich überragt und das Vakuumisolierpaneel mit dem seitlich überragenden Teil der Platte durch einen umlaufenden Strang aus Polyurethan-Schaum durch Klebewirkung verbunden ist.

4. Anordnung bestehend aus zwei starren Platten und einem Vakuumisolierpaneel, **dadurch gekennzeichnet, dass** das Vakuumisolierpaneel zwischen den beiden starren Platten angeordnet ist und mit beiden Platten in direktem Kontakt steht, die Platten das Vakuumisolierpaneel seitlich überragen und das Vakuumisolierpaneel mit den seitlich überragenden Teilen der Platten durch einen umlaufenden Strang aus Polyurethan-Schaum durch Klebewirkung verbunden ist.

5. Verfahren zur Herstellung einer Anordnung enthaltend eine starre Platte und ein Vakuumisolierpaneel, bei dem man
a) auf die starre Platte eine Schicht aus flüssigem Polyurethan-Schaumstoff-Reaktionsgemisch aufträgt, anschließend
b) in das noch flüssige Polyurethan-Schaumstoff-Reaktionsgemisch das Vakuumisolierpaneel legt und anschließend
c) das Polyurethan-Schaumstoff-Reaktionsgemisch aushärten lässt, so dass das Vakuumisolierpaneel durch die Schicht aus Polyurethan-Schaumstoff durch Klebewirkung an der Platte fixiert wird.

## Claims

1. Arrangement consisting of a rigid plate, to which pipes are fixed, and a vacuum insulation panel, **characterised in that** the rigid plate and the vacuum insulation panel are so arranged that the pipes, which are fixed to the rigid plate, and the vacuum insulation panel are in direct contact with one another on the side of the pipes that faces away from the rigid plate, and the vacuum insulation panel is connected adhesively to the plate, to which the pipes are fixed, by polyurethane foam, which is located in the cavities between the pipes and between the vacuum insulation panel and the plate.

2. Arrangement consisting of a rigid, profiled plate and a vacuum insulation panel, **characterised in that** the rigid, profiled plate and the vacuum insulation panel are so arranged that the rigid, profiled plate and the vacuum insulation panel are in direct contact with one another at the raised points of the rigid, profiled plate that are produced by the profile, and the vacuum insulation panel is connected adhesively to the plate by polyurethane foam, which is located in the cavities between the rigid, profiled plate and the vacuum insulation panel.

3. Arrangement consisting of a rigid plate and a vacuum insulation panel, **characterised in that** the rigid plate and the vacuum insulation panel are so arranged that they are in direct contact with one another, the plate projects beyond the vacuum insulation panel laterally and the vacuum insulation panel is connected adhesively to the laterally projecting part of the plate by a peripheral strand of polyurethane foam.

4. Arrangement consisting of two rigid plates and a vacuum insulation panel, **characterised in that** the vacuum insulation panel is arranged between the two rigid plates and is in direct contact with both plates, the plates project beyond the vacuum insulation panel laterally and the vacuum insulation panel is connected adhesively to the laterally projecting parts of the plates by a peripheral strand of polyurethane foam.

5. Process for producing an arrangement containing a rigid plate and a vacuum insulation panel, in which
a) a layer of liquid polyurethane foam reaction mixture is applied to the rigid plate, then
b) the vacuum insulation panel is placed in the still liquid polyurethane foam reaction mixture and then
c) the polyurethane foam reaction mixture is allowed to set, so that the vacuum insulation panel is fixed to the plate adhesively by the layer of polyurethane foam.

## Revendications

1. Agencement constitué par une plaque rigide sur laquelle sont fixés des tubes et un panneau d'isolation sous vide, **caractérisé en ce que** la plaque rigide et le panneau d'isolation sous vide sont agencés de telle sorte que les tubes, qui sont fixés sur la plaque rigide, et le panneau d'isolation sous vide sont en contact direct les uns aux autres sur la face des tubes détournée de la plaque rigide, et **en ce que** le panneau d'isolation sous vide est relié par effet adhésif à la plaque sur laquelle les tubes sont fixés, par de la mousse polyuréthanne qui se trouve dans les cavités entre les tubes et entre le panneau d'isolation sous vide et la plaque.

2. Agencement constitué par une plaque rigide sur laquelle sont fixés des tubes et un panneau d'isolation sous vide, **caractérisé en ce que** la plaque profilée rigide et le panneau d'isolation sous vide sont agencés de telle sorte que la plaque rigide profilée et le panneau d'isolation sous vide sont en contact direct l'une à l'autre sur les emplacements surélevés de la plaque profilée, qui sont produits par le profilage, et **en ce que** le panneau d'isolation sous vide est relié par effet adhésif à la plaque par de la mousse polyuréthanne qui se trouve dans les cavités entre la plaque rigide profilée et le panneau d'isolation sous vide.

3. Agencement constitué par une plaque rigide et un panneau d'isolation sous vide, **caractérisé en ce que** la plaque rigide et le panneau d'isolation sous vide sont agencés de telle sorte qu'ils sont en contact direct l'un avec l'autre, **en ce que** la plaque dépasse latéralement du panneau d'isolation sous vide et **en ce que** le panneau d'isolation sous vide est relié par effet adhésif à la partie latéralement dépassante de la plaque par un boyau périphérique en mousse de polyuréthanne.

4. Agencement constitué par deux plaques rigides et un panneau d'isolation sous vide, **caractérisé en ce que** le panneau d'isolation sous vide est agencé entre les deux plaques rigides et est en contact direct avec les deux plaques, **en ce que** les plaques dépassent latéralement le panneau d'isolation sous vide et **en ce que** le panneau d'isolation sous vide est relié par effet adhésif aux parties latéralement dépassantes des plaques par un boyau périphérique en mousse de polyuréthanne.

5. Procédé pour produire un agencement contenant une plaque rigide et un panneau d'isolation sous vide, dans lequel
a) on applique sur la plaque rigide une couche d'un mélange réactionnel de mousse de polyuréthanne liquide, ensuite
b) on pose le panneau d'isolation sous vide dans le mélange réactionnel de mousse de polyuréthanne encore liquide, et ensuite
c) on fait durcir le mélange réactionnel de mousse de polyuréthanne de sorte que le panneau d'isolation sous vide est fixé sur la plaque par effet adhésif au moyen de la couche de mousse de polyuréthanne.
